# EUROPÄISCHE PATENTSCHRIFT

(11) **EP 4 143 076 B1**
(45) Veröffentlichungstag und Bekanntmachung des Hinweises auf die Patenterteilung: **27.05.2026**
(21) Anmeldenummer: 21789631.5
(22) Anmeldetag: 04.10.2021
(51) Int. Cl.: B62D 35/00, B62D 37/02

(54) **LUFTLEITEINRICHTUNG FÜR EINEN PERSONENKRAFTWAGEN SOWIE PERSONENKRAFTWAGEN**
AIR-GUIDING DEVICE FOR A PASSENGER CAR, AND PASSENGER CAR
DISPOSITIF DE GUIDAGE D'AIR POUR VOITURE PARTICULIÈRE, ET VOITURE PARTICULIÈRE

(30) Priorität: 02.11.2020 DE 102020006694
(43) Veröffentlichungstag der Anmeldung: 08.03.2023
(73) Patentinhaber: Mercedes-Benz Group AG, 70372 Stuttgart (DE)
(72) Erfinder: ESTRADA, Gustavo, 70499 Stuttgart (DE); REIZE, Fabian, 71364 Winnenden (DE); HENKE, Carsten, 74376 Gemmrigheim (DE)
(74) Vertreter: Novagraaf Group
(86) Internationale Anmeldenummer: PCT/EP2021/077209
(87) Internationale Veröffentlichungsnummer: WO 2022/089877

(56) Entgegenhaltungen:
- WO-A1-2018/178579
- DE-A1- 102014 104 156
- DE-A1- 3 630 645
- US-A1- 2010 219 661

## Beschreibung

Die Erfindung betrifft eine Luftleiteinrichtung für die Front eines Personenkraftwagens gemäß dem Oberbegriff des Anspruchs 1. Des Weiteren betrifft die Erfindung einen Personenkraftwagen mit einer solchen Luftleiteinrichtung.

Die DE 10 2015 012 895 A1 offenbart eine Verkleidungseinrichtung für ein Frontende eines Personenkraftwagens, umfassend ein Frontverkleidungsteil mit einem Frontspoiler, welcher an seinem unteren Ende durch ein Blendenelement begrenzt ist. Der DE 36 13 303 C1 ist eine aerodynamische, gegen eine Fahrbahn absenkbare Unterbodenverkleidung für das Frontende von Kraftwagen als bekannt zu entnehmen. Außerdem ist aus der DE 10 2016 007 273 A1 eine Verkleidungseinrichtung für ein Frontende eines Personenkraftwagens bekannt.

Aus der DE 31 32 341 A geht ein Kraftfahrzeugfrontende hervor, welches mit einer Luftleiteinrichtung versehen ist, welche eine unterhalb eines Stoßfängers angeordnete, an ihrem hinteren Ende schwenkbar gelagerte Bugschürze mit einer abgerundeten Vorderkante aufweist. Die Bugschürze ist zwischen einer abgesenkten und einer angehobenen Lage schwenkbar, wobei in der abgesenkten Stellung eine Diffusorfunktion erreicht wird.

Aus der De 10 2016 122 932 B4 geht ein Kraftfahrzeug hervor, das an seinem Frontende einen Splitter als aerodynamische Einrichtung zur Erhöhung der Stärke des Abtriebs an der Fahrzeugfront aufweist, welcher den das Fahrzeug anströmenden Luftstrom teilt und einen Teilluftstrom nach unten in Richtung einer Fahrbahn lenkt.

Aus der DE 10 2014 104 156 A1 geht eine gattungsgemäße Luftleiteinrichtung für die Front eines Personenkraftwagens hervor. Weitere Luftleiteinrichtungen der hier angesprochenen Art sind aus der WO 2018/178579 A1 und der DE 36 30 645 A1 bekannt.

Aufgabe der vorliegenden Erfindung ist es, eine Luftleiteinrichtung für die Front eines Personenkraftwagens sowie einen Personenkraftwagen mit einer solchen Luftleiteinrichtung zu schaffen, so dass eine besonders hohe Aeroeffizienz realisiert werden kann.

Diese Aufgabe wird erfindungsgemäß durch eine Luftleiteinrichtung mit den Merkmalen des Anspruchs 1 sowie durch einen Personenkraftwagen mit den Merkmalen des Anspruchs 9 gelöst. Vorteilhafte Ausgestaltungen mit zweckmäßigen Weiterbildungen der Erfindung sind Gegenstand der abhängigen Ansprüche.

Ein erster Aspekt der Erfindung betrifft eine Luftleiteinrichtung für die Front und somit für ein Frontende eines Personenkraftwagens. Dies bedeutet, dass der Personenkraftwagen in seinem vollständig hergestellten Zustand an seiner Front die Luftleiteinrichtung aufweist. Die Luftleiteinrichtung weist wenigstens ein Luftleitelement auf. Das Luftleitelement ist beispielsweise ein Verkleidungselement oder ein Verkleidungsteil, mittels welchem zumindest ein an der Front des Personenkraftwagens angeordneter Bereich des Personenkraftwagens in Fahrzeughochrichtung nach unten hin überdeckt und somit verkleidet sein kann. Bei dem Bereich handelt es sich beispielsweise um einen Bereich eines Motorraums, in welchem ein insbesondere als Verbrennungskraftmaschine ausgebildeter Antriebsmotor zum Antreiben des Personenkraftwagens angeordnet sein kann. Insbesondere ist der Motorraum in Fahrzeughochrichtung nach unten hin zumindest teilweise, insbesondere zumindest überwiegend und somit zu mehr als zur Hälfte oder - wie bei einem besonders bevorzugten Ausführungsbeispiel vorgesehen -vollständig, durch das Luftleitelement überdeckt und somit verkleidet. Alternativ oder zusätzlich kann in dem zuvor genannten Bereich wenigstens ein weiteres, insbesondere separat von der Luftleiteinrichtung ausgebildetes Bauteil des Personenkraftwagens zumindest teilweise angeordnet sein, so dass das Bauteil in Fahrzeughochrichtung nach unten hin zumindest teilweise durch das Luftleitelement überdeckt und somit verkleidet ist. Bei dem Bauteil handelt es sich beispielsweise um ein Trägerelement, insbesondere um einen Längsträger. Das Trägerelement kann Bestandteil der selbsttragenden Karosserie des Personenkraftwagens sein. Ferner kann es sich bei dem Bauteil um den zuvor genannten Antriebsmotor des Personenkraftwagens handeln, welcher somit beispielsweise in Fahrzeughochrichtung nach unten hin zumindest teilweise, insbesondere zumindest überwiegend oder vollständig, durch das Luftleitelement überdeckt und somit verkleidet ist.

Das Luftleitelement ist zumindest in einem Teilbereich zumindest in Fahrzeughochrichtung zwischen einer angehobenen Stellung und einer abgesenkten Stellung, insbesondere relativ zu dem Bereich beziehungsweise relativ zu dem Bauteil bewegbar, das heißt verstellbar.

Unter der angehobenen Stellung ist zu verstehen, dass das Luftleitelement beziehungsweise zumindest der Teilbereich in der angehobenen Stellung in Fahrzeughochrichtung näher an dem Bauteil angeordnet ist als in der abgesenkten Stellung, so dass das Luftleitelement beziehungsweise der Teilbereich in der abgesenkten Stellung in Fahrzeughochrichtung weiter von dem Bauteil beabstandet ist als in der angehobenen Stellung. Wieder mit anderen Worten ausgedrückt ist beispielsweise dann, wenn der Personenkraftwagen auf einer beispielsweise zumindest im Wesentlichen horizontalen Fahrbahn steht oder entlang der Fahrbahn rollt, das Luftleitelement in der abgesenkten Stellung in Fahrzeughochrichtung näher an der Fahrbahn angeordnet ist als in der angehobenen Stellung, so dass das Luftleitelement in der angehobenen Stellung in Fahrzeughochrichtung weiter von der Fahrbahn beabstandet ist als in der abgesenkten Stellung. Dies bedeutet, dass ein in Fahrzeughochrichtung verlaufender Abstand zwischen dem Luftleitelement beziehungsweise zwischen dem Teilbereich des Luftleitelements und der Fahrbahn in der abgesenkten Stellung geringer als in der angehobenen Stellung ist.

Um nun eine besonders hohe Aeroeffizienz des Personenkraftwagens realisieren zu können, ist es vorgesehen, dass die Luftleiteinrichtung einen Splitter aufweist, dass der Splitter und das Luftleitelement mittels zumindest eines aus einem elastisch verformbaren Material gebildeten Teils verbunden sind, welcher mit zunehmender Geschwindigkeit der Umströmung zunehmend elastisch verformbar ist, und dass das Luftleitelement in der abgesenkten Stellung zumindest einen Teil eines Tragflächenprofils bildet, mittels welchem bei einer in Fahrzeuglängsrichtung von vorne nach hinten erfolgenden Umströmung des Tragflächenprofils mit Luft eine in Fahrzeughochrichtung nach unten wirkende Abtriebskraft erzeugbar ist. Dies bedeutet, dass bei der Erfindung das Tragflächenprofil ein im Vergleich zu Flugzeugen, deren Tragflächenprofile in vertikaler Richtung nach oben wirkende Auftriebskräfte und somit einen Auftrieb erzeugen, wenn die Tragflächenprofile der Flugzeuge von Luft umströmt werden, ein umgedrehtes, das heißt auf dem Kopf stehendes Tragflächenprofil ist, welches dann, wenn das Tragflächenprofil gemäß der Erfindung in Fahrzeuglängsrichtung von vorne nach hinten und somit beispielsweise bei einer Vorwärtsfahrt des Personenkraftwagens von Luft umströmt wird, eine in Fahrzeughochrichtung nach unten wirkende Abtriebskraft und somit einen sogenannten Abtrieb erzeugt. Hierdurch wird der auch als Fahrzeug bezeichnete Personenkraftwagen sozusagen in Fahrzeughochrichtung nach unten beziehungsweise gegen die Fahrbahn gesaugt, gesogen oder gedrückt.

Die Luftleiteinrichtung zeichnet sich dadurch aus, dass der Splitter, das elastische Teil und das Luftleitelement am Personenkraftwagen in horizontaler Richtung als eine Einheit in Kraftwagenlängsrichtung verschiebbar lagerbar beziehungsweise gelagert sind und gemeinsam zwischen einer in den Kraftwagenbug zurückgeschobenen Stellung und einer nach vorne ausgefahrene Stellung verlagerbar sind. Dies bedeutet, dass es vorzugsweise vorgesehen ist, dass der in Fahrzeughochrichtung erfolgenden Bewegung des Teilbereichs des Luftleitelements zwischen den Stellungen ein in Fahrzeuglängsrichtung und insbesondere relativ zu dem Bauteil erfolgende, insbesondere translatorische, Bewegung überlagert sein kann. Denkbar ist auch, dass die Einheit bei in angehobener Stellung befindlichen Luftleitelement zunächst ausgefahren wird, bevor das Luftleitelement abgesenkt wird. Soll die Einheit wieder eingefahren werden, so wäre hier zunächst das Luftleitelement in seine angehobene Stellung zu überführen, so dass das Einfahren der Einheit anschließend erst erfolgt.

Bei der erfindungsgemäßen Luftleiteinrichtung ist vorzugsweise vorgesehen, dass bei in angehobener Stellung befindlichen Luftleitelement lediglich der Splitter wirksam ist, welcher die auf den Frontbereich des Kraftwagens auftreffende Luft in Teilluftströme aufteilt, wobei ein Teilluftstrom unter den Kraftwagen geleitet wird. In dieser Funktionsstellung der Luftleiteinrichtung ist das vorzugsweise tafelförmig ausgebildete Luftleitelement so gegenüber dem Untergrund, insbesondere einer Fahrbahn, angeordnet, dass keine oder keine nennenswerte Diffusorwirkung erzielt wird. Wird nun das Luftleitelement in seine abgesenkte Stellung verlagert, wird der Raum unterhalb des Luftleitelements zur Fahrbahn hin verengt, so dass die Luftströmung, beziehungsweise die vom Splitter nach unten gelenkte Teilluftströmung der auf den Frontbereich des Kraftwagens auftreffenden Luft beschleunigt wird. Es wird mittels des Luftleitelements nunmehr ein Diffusor ausgebildet, was zu einem entsprechend Abtrieb im Bereich des Vorderwagens führt.

Des Weiteren ist es erfindungsgemäß vorgesehen, dass das Luftleitelement zumindest einen aus einem elastisch, insbesondere gummielastisch, verformbaren Material gebildeten Teil aufweist. Da der auch als erster Teil bezeichnete Teil aus dem elastisch, insbesondere gummielastisch, verformbaren Material gebildet ist, ist der erste Teil selbst elastisch, insbesondere gummielastisch, verformbar. Bei dem Material handelt es sich beispielsweise um Gummi beziehungsweise um einen Elastomer. Der aus dem elastisch verformbaren Material gebildete Teil ist mit zunehmender Geschwindigkeit der Umströmung zunehmend elastisch verformbar. Dies bedeutet, dass mit zunehmender Relativgeschwindigkeit zwischen dem Luftleitelement und der beispielsweise bei einer Vorwärtsfahrt des Personenkraftwagens das Luftleitelement in Fahrzeuglängsrichtung von vorne nach hinten umströmenden Luft der erste Teil zunehmend elastisch verformt wird. Wieder mit anderen Worten ausgedrückt, steht beispielsweise der Personenkraftwagen auf der zuvor genannten Fahrbahn zunächst still und wird, während der Personenkraftwagen auf der Fahrbahn stillsteht, das Luftleitelement beziehungsweise zumindest dessen Teilbereich aus der auch als eingefahrene Stellung bezeichneten, angehobenen Stellung in auch als ausgefahrene Stellung bezeichnete, abgesenkte Stellung bewegt, so befindet sich zunächst das Luftleitelement beziehungsweise zumindest der Teilbereich des Luftleitelements in der abgesenkten Stellung. Beginnt dann eine Vorwärtsfahrt des Personenkraftwagens entlang der Fahrbahn, während sich das Luftleitelement in der abgesenkten (ausgefahrenen) Stellung befindet, so wird bei dieser Vorwärtsfahrt des Personenkraftwagens das sich in der abgesenkten Stellung befindende Luftleitelement mit beziehungsweise von Luft umströmt, und zwar in Fahrzeuglängsrichtung von vorne nach hinten. Mit zunehmender Fahrgeschwindigkeit, mit welcher der Personenkraftwagen entlang der Fahrbahn vorwärts gefahren wird, nimmt die zuvor genannte Relativgeschwindigkeit zwischen dem sich in der abgesenkten Stellung befindenden Luftleitelement und der das Luftleitelement in Fahrzeuglängsrichtung von vorne nach hinten umströmenden Luft zu, wobei auch wenigstens eine aus dieser Umströmung resultierende, auf das sich zunächst in der abgesenkten Stellung befindende Luftleitelement wirkende Kraft zunimmt. Hierdurch wird insbesondere dann, wenn die Fahrgeschwindigkeit und somit die Relativgeschwindigkeit eine gewisse Grenze überschreiten und zunehmen, der erste Teil elastisch verformt. Durch diese, aus der zunehmenden Relativgeschwindigkeit resultierende elastische Verformung ist ein von der abgesenkten Stellung ausgehendes und in Fahrzeughochrichtung nach unten erfolgendes Absenken zumindest des Teilbereichs des Luftleitelements bewirkbar. Dies bedeutet, dass die aus der zunehmenden Relativgeschwindigkeit beziehungsweise aus der Vorwärtsfahrt resultierende, elastische, insbesondere gummielastische, Verformung des ersten Teils dazu führt, dass zumindest der Teilbereich beziehungsweise das Luftleitelement aus der abgesenkten Stellung in Fahrzeughochrichtung weiter nach unten bewegt, das heißt weiter abgesenkt wird. Hierdurch wird der in Fahrzeughochrichtung verlaufende Abstand zwischen dem Luftleitelement beziehungsweise dem Teilbereich und der Fahrbahn gegenüber der abgesenkten Stellung weiter verkleinert, wobei dieses, aus der abgesenkten Stellung erfolgende, weitere Absenken des Luftleitelements beziehungsweise zumindest des Teilbereichs vorzugsweise einzig und allein aus der Umströmung des Tragflächenprofils resultiert, ohne dass das Luftleitelement beziehungsweise der Teilbereich mittels eines Aktors aktiv abgesenkt wird.

Im Rahmen der Erfindung ist unter der Aeroeffizienz das Verhältnis aus Abtrieb des Personenkraftwagens zu dessen Luftwiderstand zu verstehen. Insbesondere bei leistungsstarken Fahrzeugen, die sowohl im öffentlichen Verkehr als auch auf abgesperrten Rennstrecken gefahren werden, ist eine besonders hohe Aeroeffizienz wünschenswert, um geringe Rundenzeiten auf der Rennstrecke zu realisieren. Wird das Fahrzeug jedoch im öffentlichen Straßenverkehr bewegt, so sollte das Fahrzeug insbesondere im Hinblick auf seinen Bodenabstand beziehungsweise seine Bodenfreiheit sowie im Hinblick auf seinen Böschungswinkel alltagstauglich sein. Vor diesem Hintergrund ist die erfindungsgemäße Luftleiteinrichtung ein flexibles, das heißt bedarfsgerecht einsetzbares System, welches einerseits einen besonders hohen Abtrieb und somit eine besonders hohe Aeroeffizienz des Personenkraftwagens und andererseits eine besonders gute Alltagstauglichkeit und Effizienz des Personenkraftwagens im öffentlichen Straßenverkehr ermöglicht. In der angehobenen Stellung ist der in Fahrzeughochrichtung verlaufende Abstand zwischen dem Luftleitelement und der Fahrbahn hinreichend groß, so dass der Personenkraftwagen einen hinreichend großen Bodenabstand beziehungsweise eine hinreichend große Bodenfreiheit aufweist. Dadurch kann der Personenkraftwagen im Alltag problemlos bewegt und insbesondere auch kollisionsfrei über Objekte wie Bordsteine gefahren werden. In der angehobenen Stellung des Luftleitelements wirkt nur beziehungsweise im Wesentlichen nur der Splitter, mittels welchem Luft, die bei einer Vorwärtsfahrt des Personenkraftwagens dessen Front in Fahrzeuglängsrichtung von vorne nach hinten anströmt, aufgeteilt wird, und zwar in eine in Fahrzeughochrichtung obere Strömung und in eine in Fahrzeughochrichtung untere Strömung, die beispielsweise unter dem Personenkraftwagen hindurchströmt. In der abgesenkten Stellung und/oder in der eingefahrenen Stellung fungiert die Luftleiteinrichtung beispielsweise als Diffusor, mittels welchem ein besonders vorteilhafter Abtrieb realisiert werden kann. Das Bewegen beziehungsweise Verstellen des Luftleitelements zwischen den auch als Positionen bezeichneten Stellungen kann beispielsweise manuell bewirkt werden, indem beispielsweise der Fahrer des Personenkraftwagens ein im Innenraum des Personenkraftwagens angeordnetes Bedienelement manuell betätigt.

Das Bewegen des Luftleitelements aus der angehobenen Stellung in die abgesenkte Stellung führt zur Bildung des zuvor beschriebenen, auf dem Kopf stehenden Tragflächenprofils, welches auch als Flügelprofil bezeichnet wird. Wie aus dem allgemeinen Stand der Technik von herkömmlichen Tragflächenprofilen hinlänglich bekannt ist, beschleunigt das Tragflächenprofil die das Tragflächenprofil in Fahrzeuglängsrichtung von vorne nach hinten umströmende Luft, und zwar erfindungsgemäß derart, dass die in Fahrzeughochrichtung nach unten wirkende Abtriebskraft erzeugt wird. Durch die Beschleunigung der Luft sinkt beispielsweise im Vergleich zu der eingefahrenen Stellung ein Druck zwischen der Luftleiteinrichtung und der auch als Boden bezeichneten Fahrbahn, wodurch der Personenkraftwagen insbesondere entsprechend dem Venturi-Effekt gegen die Fahrbahn gesaugt beziehungsweise gedrückt wird. Gleichzeitig wird dabei der Luftwiderstand des Personenkraftwagens insbesondere im Vergleich zur angehobenen Stellung reduziert, so dass eine besonders hohe Aeroeffizienz realisierbar ist.

Das Luftleitelement kann beispielsweise mittels eines Stellglieds aktiv zwischen der abgesenkten Stellung und der angehobenen Stellung bewegt werden. Denkbar ist auch, dass zumindest das Absenken beziehungsweise im Falle einer schwenkbaren Lagerung das Abklappen des Luftleitelements lediglich aufgrund seines Gewichts selbsttätig erfolgt, insbesondere nach dem Lösen einer Verriegelung, Arretierung oder sonstiger Sperre. Dadurch, dass zumindest der zwischen dem Splitter und dem Luftleitelement vorgesehene Teil aus dem elastisch verformbaren Material gebildet ist, ein aktives und elastisches, aerodynamisches Profil, welches mit zunehmender Fahrgeschwindigkeit durch einen auf das Luftleitelement wirkenden Unterdruck elastisch verformt, das heißt deformiert wird. Dieser Unterdruck resultiert insbesondere daraus, dass das Tragflächenprofil die in Fahrzeughochrichtung nach unten wirkende Abtriebskraft erzeugt. Durch diese Deformierung des ersten Teils und durch das daraus resultierende, von der abgesenkten Stellung ausgehende, weitere Absenken zumindest des Teilbereichs nimmt der Abstand zwischen dem Luftleitelement und dem Boden ab, wodurch der Abtrieb, insbesondere an einer Vorderachse des Personenkraftwagens, weiter erhöht wird. Eine zunehmende beziehungsweise größere, elastische Deformation des ersten Teils des Luftleitelements und somit ein zunehmendes Absenken zumindest des Teilbereichs des Luftleitelements gehen mit höherem Abtrieb einher und werden insbesondere durch Zunahme der Fahrgeschwindigkeit, mit welcher der Personenkraftwagen vorwärts gefahren wird, bewirkt.

Ein weiterer Vorteil der elastischen Verformbarkeit des ersten Teils des Luftleitelements ist, dass ein vorteilhaftes Aufsetzmanagement realisiert werden kann. Hierdurch können beispielsweise dann, wenn die Luftleiteinrichtung, insbesondere das Luftleitelement, auf ein sich beispielsweise auf der Fahrbahn befindendes Objekt aufsetzt, Beschädigungen der Luftleiteinrichtung vermieden werden. Kollidiert beispielsweise das sich in der abgesenkten Stellung oder in einer darüber hinaus weiter abgesenkten Stellung befindende Luftleitelement mit einem sich beispielsweise auf der Fahrbahn befindenden Objekt, so dass beispielsweise auf das Luftleitelement ein in Fahrzeughochrichtung nach oben wirkender Stoß oder Impuls oder Schlag wirkt, so kann dadurch, dass der Teil des Luftleitelements elastisch verformbar ist, das Luftleitelement diesem Stoß, Schlag beziehungsweise Impuls, insbesondere in Fahrzeughochrichtung nach oben hin, ausweichen, beispielsweise derart, dass der erste Teil des Luftleitelements durch den Schlag, Impuls beziehungsweise Stoß elastisch verformt wird. Daraufhin, das heißt nach Ende der Kollision und somit nach Ende des Schlags, des Stoßes beziehungsweise des Impulses, kehren beziehungsweise springen der elastisch verformte Teil und somit auch das Luftleitelement zurück in eine Ausgangslage, in der es zur Kollision gekommen ist. Übermäßige Beschädigungen der Luftleiteinrichtung können dadurch effektiv und auf einfache Weise vermieden werden.

Insgesamt können mittels der Erfindung die Vorteile realisiert werden, dass im Vergleich zu herkömmlichen Lösungen ein hoher Abtriebsgewinn an der Vorderachse bei gleichzeitiger Reduzierung des Luftwiderstands dargestellt werden kann. Somit kann eine besonders hohe Aeroeffizienz des Personenkraftwagens verwirklicht werden. Da der elastische Teil der Luftleiteinrichtung mit zunehmender Fahrgeschwindigkeit zunehmend elastisch verformt wird, so dass zumindest ein Teilbereich des Luftleitelements mit zunehmender Fahrgeschwindigkeit gegenüber der abgesenkten Stellung weiter abgesenkt wird, nimmt der Abtrieb mit zunehmender Fahrgeschwindigkeit weiter zu. Dabei kann auf eine Aktuatorik wie beispielsweise elektrische, hydraulische oder pneumatische Aktoren verzichtet werden, insbesondere um das Luftleitelement beziehungsweise zumindest dessen Teilbereich ausgehend von der abgesenkten Stellung weiter abzusenken. Bei hohen Kurvengeschwindigkeiten beziehungsweise bei großen Querbeschleunigungen des Personenkraftwagens nimmt durch den Abtriebsgewinn an der Vorderachse die Richtungsstabilität des Personenkraftwagens zu. Der Fahrer des Personenkraftwagens profiziert somit von einem besonders präzisen Lenkgefühl und einem besonders agilen Lenkverhalten. Des Weiteren kann in der angehobenen Stellung eine besonders vorteilhafte Alltagstauglichkeit gewährleistet werden.

Um zumindest den Teilbereich des Luftleitelements mit zunehmender Fahrgeschwindigkeit besonders effektiv weiter absenken zu können, ist es bei einer Ausführungsform der Erfindung vorgesehen, dass das Tragflächenprofil teilweise durch den aus dem elastisch verformbaren Material gebildeten Teil des Luftleitelements gebildet ist.

Bei einem bevorzugten Ausführungsbeispiel ist vorgesehen, dass das Luftleitelement und/oder der Splitter aus einem nicht-gummielastisch verformbaren Werkstoff gebildet sind/ist. Bei einer weiteren, besonders vorteilhaften Ausführungsform der Erfindung ist der Werkstoff ein faserverstärkter Kunststoff, insbesondere ein kohlefaserverstärkter Kunststoff. Hierdurch kann einerseits das Gewicht des Luftleitelements besonders gering gehalten werden und andererseits auch eine besonders hohe Steifigkeit realisiert werden, so dass die Luft besonders vorteilhaft geführt werden kann. Somit kann eine besonders hohe Aeroeffizienz dargestellt werden.

Eine weitere Ausführungsform zeichnet sich dadurch aus, dass der aus dem elastisch verformbaren Material gebildete Teil der Luftleiteinrichtung zumindest teilweise ein Bestandteil des zwischen der angehobenen Stellung und der abgesenkten Stellung bewegbaren Teilbereiches des Luftleitelements ist. Das elastische Teil kann beispielsweise an das Luftleitelement angespritzt sein und gegebenenfalls auch an den Splitter. Dadurch kann die das Luftleitelement an- und umströmende Luft besonders vorteilhaft und insbesondere direkt den elastischen Teil an- und umströmen, so dass dieser effektiv elastisch verformt und in der Folge zumindest der Teilbereich vorteilhaft abgesenkt wird, insbesondere ohne Verwendung eines separaten, zusätzlichen Aktors.

Ein zweiter Aspekt der Erfindung betrifft einen Personenkraftwagen, mit einer erfindungsgemäßen Luftleiteinrichtung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile und Einzelheiten der Erfindung ergeben sich aus der nachfolgenden Beschreibung sowie anhand der Zeichnung. Dabei zeigen:
- Fig. 1: ausschnittsweise eine schematische und perspektivische Vorderansicht eines Personenkraftwagens, an dessen Front eine Luftleiteinrichtung angeordnet ist, die ein Luftleitelement mit zumindest einem aus einem elastisch verformbaren Material gebildeten Teil aufweist;
- Fig. 2: ausschnittsweise eine schematische Seitenansicht des Personenkraftwagens;
- Fig. 3: ausschnittsweise eine weitere schematische und perspektivische Vorderansicht des Personenkraftwagens;
- Fig. 4: ausschnittsweise eine weitere schematische Seitenansicht des Personenkraftwagens;
- Fig. 5: jeweils ausschnittsweise schematische und geschnittene Seitenansichten der Luftleiteinrichtung;
- Fig. 6: jeweils ausschnittsweise weitere schematische und geschnittene Seitenansichten der Luftleiteinrichtung; und
- Fig. 7: ausschnittsweise eine weitere schematische und geschnittene Seitenansicht der Luftleiteinrichtung.

In den Figuren sind gleiche oder funktionsgleiche Elemente mit gleichen Bezugszeichen versehen, so dass insofern auf die Beschreibung der vorangegangenen Figuren verwiesen wird.

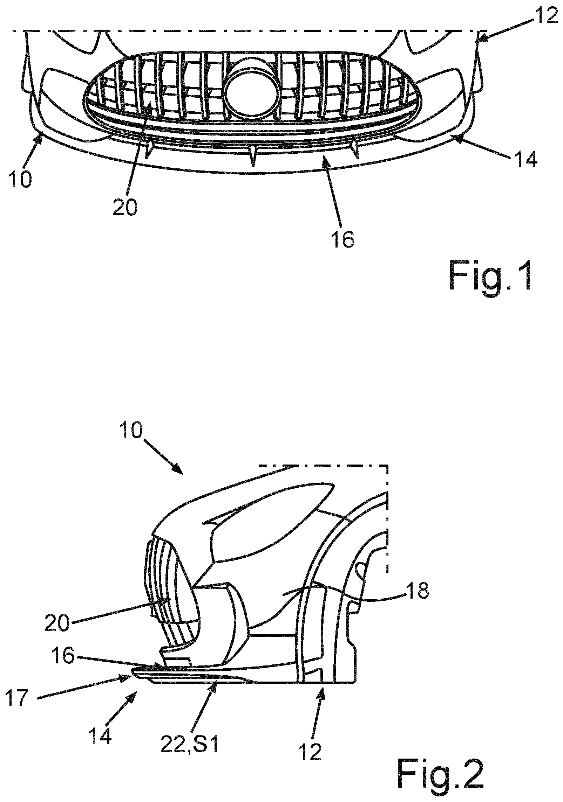

Figur 1 zeigt ausschnittsweise in einer schematischen und perspektivischen Vorderansicht einen Personenkraftwagen 10, an dessen Front 12 eine Luftleiteinrichtung 14 angeordnet ist. Die Luftleiteinrichtung 14 umfasst beispielsweise einen sogenannten Splitter 16, welcher eine aerodynamische Vorrichtung ist, die unter anderem zur Erhöhung der Stärke des Abtriebs an der Fahrzeugfront eingesetzt ist. Bei Vorwärtsfahrt des Personenkraftwagens wird der den Kraftwagenfrontbereich anströmende Luftstrom geteilt, wobei ein Teilluftstrom nach oben geführt wird und beispielsweise zur Kühlung von Bauteilen beziehungsweise Aggregaten verwendet wird, während ein anderer Teilluftstrom unter den Personenkraftwagen geleitet wird. Da die Luftleiteinrichtung 14 beziehungsweise der Splitter 16 ein entsprechendes Profil aufweist, vorzugsweise ein umgekehrtes Flügelprofil beziehungsweise ein Profil, welches einem umgekehrten Flügelprofil zumindest in seiner Wirkungsweise nahekommt, wird die unter den Splitter 14 geleitete Luft beim Einströmen unter den Personenkraftwagen beschleunigt. Das erzeugt einen Unterdruck und damit Abtrieb an der Vorderachse.

Der Splitter 16 ist vorzugsweise plattenförmig ausgebildet, wobei diese horizontal oder im Wesentlichen horizontal verläuft, und erstreckt sich zumindest über einen Teilbereich des Personenkraftwagens in Fahrzeugquerrichtung (y-Richtung im Kraftwagenkoordinatensystem). Ferner weist die Luftleiteinrichtung 14 eine abgerundete beziehungsweise im Wesentlichen abgerundete Vorderkante 17 auf.

In Zusammenschau mit Figur 2 ist erkennbar, dass der Personenkraftwagen 10 an seiner Front 12 eine vordere Stoßfängerverkleidung 18 aufweist, welche sich beispielsweise in Fahrzeughochrichtung nach oben hin an die Luftleiteinrichtung 14 und/oder an den Splitter 16 anschließt. Mittels der Stoßfängerverkleidung 18 ist ein in den Figuren nicht erkennbarer, vorderer Biegequerträger des Personenkraftwagens 10 in Fahrzeuglängsrichtung nach vorne hin sowie gegebenenfalls in Fahrzeugquerrichtung beidseitig nach außen hin überdeckt und somit verkleidet.

Der Personenkraftwagen 10 weist ferner an seiner Front 12 einen als Motorraum ausgebildeten Bereich auf, wobei in dem Motorraum ein beispielsweise als Verbrennungskraftmaschine ausgebildeter Antriebsmotor zum Antreiben des Personenkraftwagens 10 angeordnet ist. Zumindest ein Teilbereich des Motorraums ist in Fahrzeuglängsrichtung nach vorne hin durch einen auch als Kühlergrill bezeichneten Grill 20 überlappt, durch welchen beispielsweise bei einer Vorwärtsfahrt des Personenkraftwagens 10 Luft hindurchströmen kann. Die in Fahrzeuglängsrichtung von vorne nach hinten durch den Grill 20 strömende Luft strömt in den Motorraum ein und kann beispielsweise einen im Motorraum angeordneten Kühler an- und umströmen. Der Kühler und der Antriebsmotor sind beispielsweise im Motorraum angeordnete Komponenten oder Bauteile des Personenkraftwagens 10.

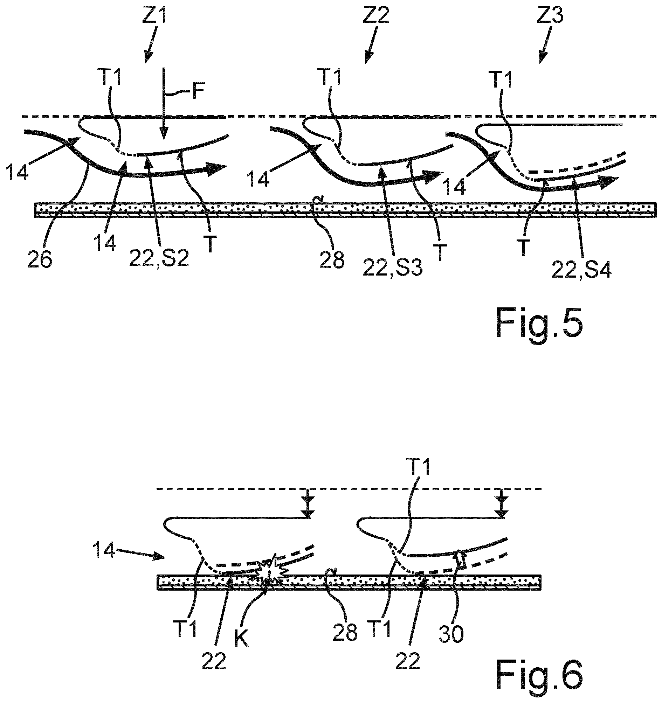

Besonders gut in Zusammenschau mit den Figuren 5 bis 7 ist erkennbar, dass die Luftleiteinrichtung 14 neben dem Splitter 16 noch wenigstens ein Luftleitelement 22 aufweist. Beispielsweise ist zumindest ein Teil des Motorraums in Fahrzeughochrichtung nach unten hin durch das Luftleitelement 22 überlappt und somit verkleidet, so dass das Luftleitelement 22 ein Verkleidungsteil sein kann. Alternativ oder zusätzlich kann zumindest ein Teil wenigstens einer der Komponenten in Fahrzeughochrichtung (z-Richtung im Kraftwagenkoordinatensystem) nach unten hin durch das Luftleitelement 22 überdeckt und somit verkleidet sein. Insbesondere ist es denkbar, dass das Luftleitelement 22 Bestandteil des Splitters 16 ist.

Wie aus den Figuren 1 bis 5 erkennbar ist, kann das Luftleitelement 22 zumindest in einem Teilbereich, insbesondere zumindest überwiegend oder vollständig, zwischen einer angehobenen Stellung S1, welche auch als eingefahrene Stellung bezeichnet wird, und einer abgesenkten Stellung S2, welche auch als ausgefahrene Stellung bezeichnet wird, zumindest in Fahrzeughochrichtung und vorliegend auch in Fahrzeuglängsrichtung (x-Richtung im Kraftwagenkoordinatensystem) bewegt werden, insbesondere relativ zu den zuvor genannten Komponenten sowie vorzugsweise relativ zu der selbsttragenden Karosserie des Personenkraftwagens 10.

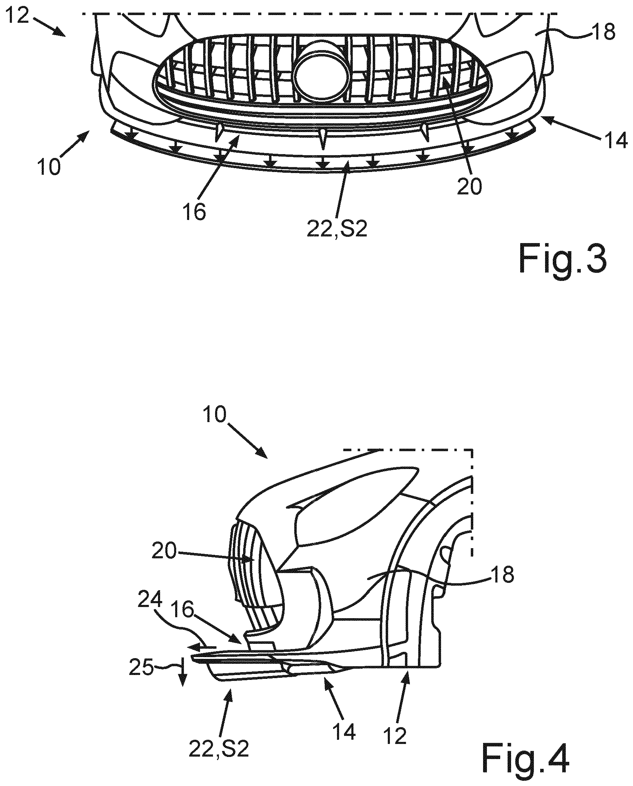

Wie in Figur 4 durch Pfeile 24 und 25 veranschaulicht ist, wird - um das Luftleitelement 22 aus der angehobenen Stellung S1 in die abgesenkte Stellung S2 zu bewegen - zunächst die gesamte Luftleiteinrichtung 14, also insbesondere die Einheit/der Verbund umfassend den Splitter 16, das elastische Teil T1 und das Luftleitelement 22, in Fahrzeuglängsrichtung - der Richtung des Pfeils 24 folgend - nach vorne und nach Erreichen der ausgefahrenen Stellung das Luftleitelement 22 in Fahrzeughochrichtung - der Richtung des Pfeils 25 folgend - nach unten, insbesondere relativ zu der jeweiligen Komponente, bewegt. Um das Luftleitelement 22 aus der abgesenkten Stellung S2 in die angehobene Stellung S1 zu bewegen, wird das Luftleitelement 22 in Fahrzeughochrichtung nach oben und in Fahrzeuglängsrichtung nach hinten relativ zu der jeweiligen Komponente und insbesondere relativ zu der auch als Rohbau bezeichneten Karosserie bewegt.

Wie besonders gut aus Figur 5 erkennbar ist, bildet das Luftleitelement 22 zumindest in der abgesenkten Stellung S2 zusammen beziehungsweise unter zusammenwirken mit dem Splitter 16 und einem weiteren Teil T1, auf welches nachfolgend näher eingegangen wird, ein Tragflächenprofil T, mittels welchem bei einer in Fahrzeuglängsrichtung von vorne nach hinten erfolgenden, in Figur 5 durch einen Pfeil 26 veranschaulichten Umströmung des Tragflächenprofils T mit Luft eine in Fahrzeughochrichtung nach unten wirkende und in Figur 5 durch einen Kraftpfeil F veranschaulichte Abtriebskraft erzeugbar ist.

Wie hinlänglich aus dem allgemeinen Stand der Technik bekannt ist, erzeugen Tragflächen und somit Tragflächenprofile von Flugzeugen dann, wenn Luft von vorne nach hinten um die Tragflächenprofile strömt, eine in vertikaler Richtung nach oben wirkende Auftriebskraft und somit einen Auftrieb, so dass das jeweilige Flugzeug fliegt. Gegenüber einem solchen Tragflächenprofil eines Flugzeugs ist das Tragflächenprofil T der Luftleiteinrichtung 14 ein umgedrehtes beziehungsweise auf dem Kopf stehendes Tragflächenprofil, da das Tragflächenprofil T dann, wenn in Figur 5 durch den Pfeil 26 veranschaulichte Luft in Fahrzeuglängsrichtung von vorne nach hinten das Tragflächenprofil T umströmt, die in Fahrzeughochrichtung nach unten wirkende Abtriebskraft und somit einen Abtrieb erzeugt. Somit wird beispielsweise dann, wenn der Personenkraftwagen 10 entlang einer auch als Boden bezeichneten Fahrbahn 28 (Figur 5) vorwärts gefahren wird, gegen die Fahrbahn 28 gesaugt beziehungsweise gedrückt.

Die Luftleiteinrichtung 14 beziehungsweise das Luftleitelement 22 weist zumindest den Teil T1 auf, welcher aus einem elastisch beziehungsweise gummielastisch verformbaren Material, insbesondere aus Gummi beziehungsweise einem Elastomer, gebildet und somit elastisch beziehungsweise gummielastisch verformbar ist. Das Teil T1 ist beispielsweise als Lippe, insbesondere eine Gummilippe, ausgebildet und stellt ein Verbindungsmittel zwischen dem Luftleitelement 22 und dem Splitter 16 dar. Hierzu ist das Teil T1 einenends am Splitter 16, vorzugsweise im Bereich dessen Vorderkante 17, insbesondere unterhalb derselben und in Fahrzeuglängsrichtung nach hinten versetzt befestigt und anderenends am vorderen Querrandbereich des Luftleitelements 22. Das Luftleitelement 22 ist an seinem hinteren Randbereich um eine Achse, welche vorzugsweise in Kraftwagenquerrichtung verläuft, schwenkbar gelagert, so dass das Luftleitelement 22 an seinem vorderen Randbereich, an dem das Teil T1 gehalten ist, abgesenkt beziehungsweise wieder angehoben werden kann. Zusammen mit der schwenkbeweglichen Lagerung um die Achse ergibt sich hier ein Abkippen und Anstellen des Luftleitelements 22. In beziehungsweise ausgehend von der abgesenkten Stellung S2 ist der Teil T1 mit zunehmender Geschwindigkeit der Umströmung, das heißt mit zunehmender Relativgeschwindigkeit zwischen der durch den Pfeil 26 veranschaulichten Umströmung und dem Tragflächenprofil T zunehmend elastisch beziehungsweise gummielastisch verformbar, wodurch ein von der ausgefahrenen Stellung S2 ausgehendes und in Fahrzeughochrichtung nach unten erfolgendes, weiteres Absenken zumindest des Teilbereichs des Luftleitelements 22 beziehungsweise des Luftleitelements 22 selbst bewirkbar ist, indem das Luftteilelement 22 um das Schwenklager an seinem hinteren Ende so schwenkt, dass sein vorderer Randbereich sich dem Untergrund, beispielsweise einer Fahrbahn nähert. Mit anderen Worten, wird eine Fahrgeschwindigkeit, mit welcher der Personenkraftwagen 10 entlang der Fahrbahn 28 vorwärts gefahren wird, während sich das Luftleitelement 22 zunächst in der abgesenkten Stellung S2 befindet, erhöht, so nimmt die Relativgeschwindigkeit zwischen dem Tragflächenprofil T und der das Tragflächenprofil T in Fahrzeuglängsrichtung von vorne nach hinten umströmenden und in Figur 5 durch den Pfeil 26 veranschaulichten Luft zu. Hierdurch nimmt auch beispielsweise eine auf das sich zunächst in der abgesenkten Stellung S2 befindende Luftleitelement 22 wirkende und beispielsweise in Fahrzeughochrichtung nach unten gerichtete Kraft, wie beispielsweise die Abtriebskraft zu, so dass der Teil T1 mit zunehmender Fahrgeschwindigkeit beziehungsweise mit zunehmender Kraft zunehmend elastisch verformt wird, derart, dass das Luftleitelement 22 beziehungsweise zumindest dessen Teilbereich ausgehend von der abgesenkten Stellung S2 weiter in Fahrzeughochrichtung nach unten abgesenkt wird. Damit sich das Teil T1 in der vorstehend beschriebenen Weise elastisch verformen kann und somit ein Absenken beziehungsweise ein weiteres Absenken des Luftleitelements 22 relativ gegenüber dem Splitter 16 ermöglicht wird, ist der Splitter 16 entsprechend stabil ausgebildet und bleibt vorzugsweise in seiner Stellung und wird nicht oder nur in einem sehr geringen Maße durch das Luftleitelement 22 und das Teil T1 mit nach unten gezogen. Der Splitter 16 hält also den die Verformung des Teils T1 bewirkenden Kräften stand und wird - wenn überhaupt - in nur unerheblicher Weise verformt beziehungsweise nach unten gebogen.

Die gesamte Luftleiteinrichtung 14, umfassend den Splitter 16, das Teil T1 sowie das an seinem hinteren Ende schwenkbar gelagerte Luftleitelement 22, ist am Personenkraftwagen in horizontaler Richtung als eine Einheit in Kraftwagenlängsrichtung verschiebbar gelagert und aus einer in den Kraftwagenbug zurückgeschobenen Stellung, welche in Figur 2 dargestellt ist, in eine nach vorne über den Bug beziehungsweise die Kraftwagenfront vorstehende, ausgefahrene Stellung, wie sie in Figur 4 dargestellt ist, verlagert werden. In seiner zurückgeschobenen Stellung gemäß Figur 2 ist die Luftleiteinrichtung 14, insbesondere das Luftleitelement 22 mittels einer in den Figuren nicht dargestellten Arretierungseinrichtung so gehalten, dass es nicht an seinem vorderen Ende nach unten abkippen beziehungsweise durch Verformung des Teils T1 absenken kann. In der zurückgeschobenen Stellung ist praktisch nur der Splitter 16 wirksam und erfüllt seine originäre Funktion, während das in seiner angehobenen Position befindliche Luftleitelement 22 noch keine beziehungsweise praktisch keine Diffusorfunktion aufweist, das heißt dieses verengt den Raum unterhalb des Splitters 16 und der Fahrbahn noch nicht. Um nun die Luftleiteinrichtung 14 aus ihrer zurückgeschobenen Stellung (Figur 2) in ihre nach vorne ausgefahrene Stellung (Figur 4) verlagern zu können, muss zunächst einmal die Arretierung aufgehoben werden, so dass die Luftleiteinrichtung 14 als Ganzes/Verbund verschoben werden kann. Das Teil T1 ist so groß dimensioniert beziehungsweise mit einem Materialüberschuß versehen, dass bei ausgefahrener Luftleiteinrichtung 14 das Luftleitelement 22 um seine Lagerachse verschwenkt und so vorne nach unten abgesenkt wird, bis das elastische Teil T1 zumindest in einem gewissen Maße gespannt ist. Dieses Abkippen erfolgt vorzugsweise selbsttätig aufgrund der auf das Luftleitelement 22 wirkenden Schwerkraft.

Nachfolgend wird die Funktion der Luftleiteinrichtung 14, insbesondere die des elastischen Teils T1, anhand der Figur 5 näher erläutert. Dabei ist die Luftleiteinrichtung 14 stark schematisiert bereits in ihrer ausgefahrenen Stellung gemäß Figur 4 dargestellt. In der linken Abbildung der Figur 5 ist ein erster Zustand Z1 der Luftleiteinrichtung 14 gezeigt. In dem Zustand Z1 steht beispielsweise der Personenkraftwagen 10 still auf der Fahrbahn 28 oder der Personenkraftwagen 10 wird mit einer nur geringen Fahrgeschwindigkeit entlang der Fahrbahn 28 vorwärts gefahren, so dass sich das Luftleitelement 22 in der abgesenkten Stellung S2 befindet. In der mittleren Abbildung der Figur 5 ist außerdem ein zweiter Zustand der Luftleiteinrichtung 14 mit Z2 bezeichnet. In dem zweiten Zustand Z2 wird der Personenkraftwagen 10 gegenüber dem Zustand Z1 mit einer höheren Fahrgeschwindigkeit entlang der Fahrbahn 28 vorwärts gefahren. In dem Zustand Z2 ist die Fahrgeschwindigkeit des Personenkraftwagens 10 so hoch, dass der Teil T1 durch die Umströmung gegenüber dem Zustand Z1 elastisch verformt ist, derart, dass das Luftleitelement 22 gegenüber dem Zustand Z1 und somit gegenüber der abgesenkten Stellung S2 weiter in Fahrzeughochrichtung nach unten abgesenkt ist und somit eine dritte Stellung S3 einnimmt. Es wird hierbei nochmals darauf hingewiesen, dass das Absenken durch ein Verschwenken des Luftleitelements 22 an seinem dem Teil T1 abgewandten Endbereich um die Achse erfolgt, so dass das Luftleitelement 22 vorne nach unten abkippt. In der dritten Stellung S3 ist zumindest der Teilbereich des Luftleitelements 22 in Fahrzeughochrichtung weiter unten angeordnet als in der abgesenkten Stellung S2. Des Weiteren ist in der rechten Abbildung der Figur 5 mit Z3 ein dritter Zustand der Luftleiteinrichtung 14 bezeichnet. In dem dritten Zustand Z3 wird der Personenkraftwagen 10 gegenüber dem zweiten Zustand Z2 mit einer nochmals höheren Fahrgeschwindigkeit entlang der Fahrbahn 28 vorwärts gefahren. In der Folge ist der Teil T1 in dem dritten Zustand Z3 gegenüber dem zweiten Zustand Z2 stärker elastisch verformt, so dass in dem dritten Zustand Z3 gegenüber dem zweiten Zustand Z2 das Luftleitelement 22 weiterhin in Fahrzeughochrichtung nach unten abgesenkt ist. Somit nimmt in dem dritten Zustand Z3 das Luftleitelement 22 eine vierte Stellung S4 ein, in welcher das Luftleitelement 22 gegenüber dem dritten Zustand Z3 beziehungsweise gegenüber der dritten Stellung S3 in Fahrzeughochrichtung weiter unten angeordnet ist.

Das weitere Absenken des Luftleitelements 22 aus der abgesenkten Stellung S2 in die Stellung S3 beziehungsweise S4 erfolgt einzig und allein durch Zunahme der Fahrgeschwindigkeit des Personenkraftwagens 10 beziehungsweise einzig und allein durch die zunehmende Relativgeschwindigkeit zwischen dem Tragflächenprofil T und der Umströmung und somit ohne die Verwendung von zusätzlichen, aktiven Aktoren.

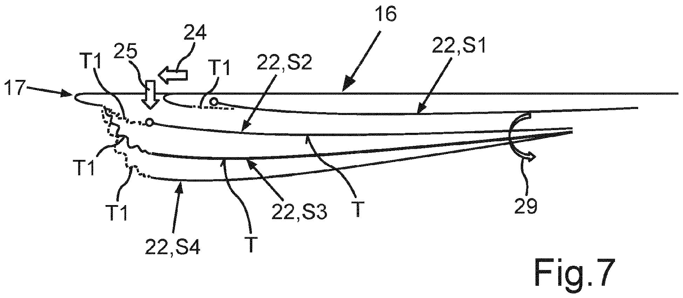

Das Luftleitelement 22 und insbesondere dessen Bewegung oder Bewegbarkeit zwischen den Stellungen S1, S2, S3 und S4 ist auch besonders gut aus Figur 7 erkennbar. Durch einen Pfeil 29 ist veranschaulicht, dass das Luftleitelement 22 beziehungsweise zumindest dessen Teilbereich um eine Schwenkachse relativ zu der jeweiligen, zuvor genannten Komponente beziehungsweise relativ zu der selbsttragenden Karosserie zwischen den Stellungen S1-4 verschwenkbar ist. Außerdem ist aus Figur 7 erkennbar, dass der Teil T1 zumindest teilweise, insbesondere zumindest überwiegend oder vollständig, Bestandteil des Tragflächenprofils T ist, so dass das Tragflächenprofil T teilweise durch den Teil T1 gebildet ist. Das Luftleitelement 22 bildet wenigstens einen sich in Fahrzeuglängsrichtung nach hinten an den aus dem elastisch verformbaren Material gebildeten, ersten Teil T1 anschließenden, zweiten Teil T2 des Tragflächenprofils T. Das Luftleitelement 22 schließt sich in Fahrzeuglängsrichtung nach hinten direkt an den Teil T1 an, wobei sowohl der Teil T1 an sich als auch das Luftleitelement 22 an sich vorzugsweise einstückig ausgebildet ist. Das Luftleitelement 22 ist aus einem nicht-gummielastisch verformbaren Werkstoff gebildet. Bei dem in den Figuren gezeigten Ausführungsbeispiel handelt es sich bei dem Werkstoff um einen kohlefaserverstärkten Kunststoff, so dass auf besonders gewichtsgünstige Weise eine besonders hohe Steifigkeit des Luftleitelements 22 realisiert werden kann. Dadurch kann die Luft, die zunächst den Teil T1 an- und umströmt und von dem Teil T1 zum Luftleitelement 22 strömt, mittels des Luftleitelements 22 vorteilhaft geleitet werden, ohne dass es zu übermäßigen Deformationen des Luftleitelements 22 kommt. Dabei ist das Tragflächenprofil T auch teilweise durch den zweiten Teil T2, also das Luftleitelement 22 gebildet. Dies bedeutet, dass das Luftleitelement 22 zumindest teilweise, insbesondere zumindest überwiegend oder vollständig, Bestandteil des Tragflächenprofils T ist.

In Figur 7 sind die Luftleiteinrichtung 14 und das Luftleitelement 22 jeweils in verschiedenen Stellungen dargestellt. Nachfolgend wird die Funktionsweise der Luftleiteinrichtung 14 nochmals näher erläutert. Die Luftleiteinrichtung 14 ist in der Darstellung gemäß Figur 7 oben rechts in ihrer eingefahrenen Stellung dargestellt, in welcher die Vorderkante 17 des Splitters 16 sich in einer hinteren Position, wie auch in Figur 2 dargestellt, und das Luftleitelement 22 in einer angehobenen Position - hier annährend parallel zur einer Fahrbahn - angeordnet ist. Nun wird die Luftleiteinrichtung 14 in Richtung des Pfeils 24 in Vorwärtsfahrtrichtung nach vorne verschoben und vorher oder dabei, also während der Verlagerung, die Arretierung des Luftleitelements 22 gelöst, so dass dieses spätestens nach Erreichen der ausgefahrenen Stellung des Splitters 16, wie in Figur 4 dargestellt, vorne nach unten abkippen kann, was mittels der Schwenklagerung (nicht dargestellt) an seinem hinteren Ende in Richtung des Pfeils 29 möglich ist. Dabei wird das Luftleitelement 22 in seine Position S2 verlagert. Durch entsprechend hohe Fahrgeschwindigkeiten kann sich das Luftleitelement 22 weiter absenken in die Positionen S3 und S4, was mittels des elastischen Teils T1 möglich ist. Wird die auf die Luftleiteinrichtung wirkende Windlast geringer, zieht sich das elastische Teil T1 wieder zusammen, so dass das Luftleitelement 22 aus der Position S4 in S3 bis hin zu S2 zurückverlagert, insbesondere um die Lagerachse entgegen der Richtung des Pfeils 29 verschwenkt und dabei angehoben wird. Das Absenken des Luftleitelements 22 im Bereich seines vorderen Randbereichs führt zu einer Verengung des Raums unter dem Kraftwagen, in der die Luft frei strömen kann und gibt ihr außerdem noch eine Stromrichtung vor. So kommt es bei einem fahrenden Kraftwagen zu dem sogenannten "Venturi-Effekt", also dass die Luft schneller strömt, wenn sie eingeengt wird.

Aus Figur 6 geht besonders gut ein sogenanntes Aufsetzmanagement der Luftleiteinrichtung 14 hervor. Wie in Figur 6 besonders schematisch gezeigt und mit K bezeichnet ist, kann es insbesondere dann, wenn sich das Luftleitelement 22 in der Stellung S2, S3 oder in der Stellung S4 befindet, zu einer Kollision des Luftleitelements 22 mit dem Untergrund oder einem auf dem Untergrund befindlichen Objekt, beispielsweise einem Randstein oder einem Stein, Gegenstand oder dergleichen kommen. Beispielsweise ist das Luftleitelement 22 eine auch als Unterschale bezeichnete Schale. Da das Luftleitelement 22 beispielsweise aus einem kohlefaserverstärkten Kunststoff gebildet ist, wird dieses auch als Karbonschale oder Karbon-Unterschale bezeichnet. Da der Teil T1 elastisch verformbar ist, kann das Luftleitelement 22 bei einer Kollision K mit der Fahrbahn 28 oder mit einem auf der Fahrbahn 28 angeordneten Objekt derart in Fahrzeughochrichtung nach oben ausweichen, indem es um seine Lagerachse nach oben schwenkt. Nach Ende der Kollision K kann sich der elastisch verformte Teil T1 zumindest teilweise entspannen und somit zurückfedern, so dass das Luftleitelement 22 in seine Ausgangslage zurückspringt, die es vor der Kollision K eingenommen hatte. Übermäßige Beschädigungen der Luftleiteinrichtung 14 können dadurch vermieden werden.

Der Teil T1 wird insbesondere dadurch mit zunehmender Fahrgeschwindigkeit zunehmend elastisch verformt, dass mit zunehmender Fahrgeschwindigkeit beziehungsweise mit zunehmender Relativgeschwindigkeit zwischen der Umströmung und dem Tragflächenprofil T ein auf das Tragflächenprofil T beziehungsweise auf den Teil T1 wirkender Unterdruck, insbesondere zwischen der Fahrbahn 28 und der Luftleiteinrichtung 14, zunimmt. Mit zunehmender elastischer Verformung des Teils T1 wird das Luftleitelement 22 zunehmend in Fahrzeughochrichtung nach unten abgesenkt, wodurch die Abtriebskraft beziehungsweise der Abtrieb weiter erhöht wird. Diese von der Stellung S2 ausgehende Erhöhung des Abtriebs wird insbesondere einzig und allein durch den zunehmenden Unterdruck und somit ohne aktiven Aktor realisiert. Durch Absenken beziehungsweise Ausfahren des Luftleitelements 22 wird auch der Luftwiderstand des Personenkraftwagens 10 reduziert, so dass mittels der Luftleiteinrichtung 14 eine besonders hohe Aeroeffizienz des Personenkraftwagens 10 dargestellt werden kann.

## Patentansprüche

1. Luftleiteinrichtung (14) für die Front (12) eines Personenkraftwagens (10), mit wenigstens einem Luftleitelement (22), welches zumindest in einem Teilbereich zumindest in Fahrzeughochrichtung zwischen einer angehobenen Stellung (S1) und einer abgesenkten Stellung (S2) bewegbar ist, wobei die Luftleiteinrichtung (14) einen Splitter (16) aufweist, wobei der Splitter (16) und das Luftleitelement (22) mittels zumindest eines aus einem elastisch verformbaren Material gebildeten Teils (T1) verbunden sind, welcher mit zunehmender Geschwindigkeit der Umströmung (26) zunehmend elastisch verformbar ist, und wobei das Luftleitelement (22) in der abgesenkten Stellung (S2) zumindest einen Teil eines Tragflächenprofils (T) bildet, mittels welchem bei einer in Fahrzeuglängsrichtung von vorne nach hinten erfolgenden Umströmung (26) des Tragflächenprofils (T) mit Luft eine in Fahrzeughochrichtung nach unten wirkende Abtriebskraft (F) erzeugbar ist,
**dadurch gekennzeichnet, dass**
der Splitter (16), das elastische Teil (T1) und das Luftleitelement (22) am Personenkraftwagen in horizontaler Richtung als eine Einheit in Kraftwagenlängsrichtung verschiebbar lagerbar und gemeinsam zwischen einer in den Kraftwagenbug zurückgeschobenen Stellung und einer nach vorne ausgefahrene Stellung verlagerbar sind

2. Luftleiteinrichtung (14) nach Anspruch 1,
**dadurch gekennzeichnet, dass**
das Tragflächenprofil (T) teilweise durch den Teil (T1) und gegebenenfalls teilweise durch den Splitter (16) gebildet ist.

3. Luftleiteinrichtung (14) nach Anspruch 1 oder 2,
**dadurch gekennzeichnet, dass**
das Luftleitelement (22) und/oder der Splitter (16) aus einem nicht-gummielastisch verformbaren Werkstoff gebildet sind/ist.

4. Luftleiteinrichtung (14) nach einem der vorhergehenden Ansprüche,
**dadurch gekennzeichnet, dass**
das Teil (T1) so elastisch ausgebildet ist, dass mit zunehmender Geschwindigkeit der Umströmung (26) der Luftleiteinrichtung (14) ein weitergehendes Absenken zumindest eines Teilbereiches des Luftleitelements (22) in Fahrzeughochrichtung nach unten ausgehend von der abgesenkten Stellung (S2) bewirkbar ist.

5. Luftleiteinrichtung (14) nach einem der vorhergehenden Ansprüche,
**dadurch gekennzeichnet, dass**
das Teil (T1) bei in angehobener Stellung (S1) des Luftleitelements (22) zumindest abschnittsweise gefaltet ist.

6. Luftleiteinrichtung (14) nach einem der vorhergehenden Ansprüche,
**dadurch gekennzeichnet, dass**
das Luftleitelement (22) in seiner angehobenen Stellung (S1) in seiner Relativlage gegenüber dem Splitter (16) fixierbar ist.

7. Luftleiteinrichtung (14) nach einem der vorhergehenden Ansprüche,
**dadurch gekennzeichnet, dass**
das Luftleitelement (22) an seinem hinteren Querrandbereich schwenkbar gelagert ist, wobei die Lage der Schwenkachse in Fahrzeughochrichtung in jeder Position der Luftleiteinrichtung (14) gleichbleibend ist.

8. Luftleiteinrichtung (14) nach einem der vorhergehenden Ansprüche,
**dadurch gekennzeichnet, dass**
das Luftleitelement (22) tafelförmig ausgebildet ist.

9. Personenkraftwagen mit einer Luftleiteinrichtung (14) nach einem der vorhergehenden Ansprüche.

## Claims

1. Air guide (14) for the front (12) of a passenger car (10), comprising at least one air guide element (22) which, at least in a partial region, at least in a vehicle vertical direction, is movable between a raised position (S1) and a lowered position (S2), the air guide (14) having a splitter (16), the splitter (16) and the air guide element (22) being connected by means of at least one part (T1) formed from an elastically deformable material, which part is increasingly elastically deformable with increasing speed of the flow (26), and, in the lowered position (S2), the air guide element (22) forming at least one part of an airfoil (T) by means of which a downforce (F) which is downwardly acting in the vehicle vertical direction can be generated when there is a flow (26) of air around the airfoil (T) in the vehicle longitudinal direction from front to rear,
**characterized in that**
the splitter (16), the elastic part (T1) and the air guide element (22) are mountable on the passenger car in a horizontal direction so as to be movable as one unit in the car longitudinal direction, and are movable together between a position that is retracted into the front of the car and a position that is extended forward.

2. Air guide (14) according to claim 1,
**characterized in that**
the airfoil (T) is formed partly by the part (T1) and, if applicable, partly by the splitter (16).

3. Air guide (14) according to claim 1 or claim 2,
**characterized in that**
the air guide element (22) and/or the splitter (16) are/is formed from a non-rubber-elastically deformable material.

4. Air guide (14) according to any of the preceding claims,
**characterized in that**
the part (T1) is formed elastically such that, with increasing speed of the flow (26) from the air guide (14), a further lowering at least of a partial region of the air guide element (22) downward in the vehicle vertical direction is effectible starting from the lowered position (S2).

5. Air guide (14) according to any of the preceding claims,
**characterized in that**
the part (T1) is folded at least in portions when the air guide element (22) is in the raised position (S1).

6. Air guide (14) according to any of the preceding claims,
**characterized in that,**
in its raised position (S1), the air guide element (22) is fixable in its relative position with respect to the splitter (16).

7. Air guide (14) according to any of the preceding claims,
**characterized in that**
the air guide element (22) is pivotably mounted at its rear transverse edge region, the position of the pivot axis in the vehicle vertical direction being consistent in every position of the air guide (14).

8. Air guide (14) according to any of the preceding claims,
**characterized in that**
the air guide element (22) is tabular.

9. Passenger car comprising an air guide (14) according to any of the preceding claims.

## Revendications

1. Dispositif de guidage d'air (14) pour l'avant (12) d'une voiture de tourisme (10), comportant au moins un élément de guidage d'air (22) qui est mobile au moins dans une zone partielle au moins dans la direction verticale de véhicule entre une position relevée (S1) et une position abaissée (S2), dans lequel le dispositif de guidage d'air (14) présente un séparateur (16), dans lequel le séparateur (16) et l'élément de guidage d'air (22) sont reliés au moyen d'au moins une partie (T1) formée à partir d'un matériau déformable élastiquement qui est de plus en plus déformable élastiquement à mesure que la vitesse de l'écoulement (26) croît, et dans lequel l'élément de guidage d'air (22) forme, dans la position abaissée (S2), au moins une partie d'un profil de surface portante (T) au moyen de laquelle, lors d'un écoulement (26) d'air s'effectuant de l'avant vers l'arrière autour du profil de surface portante (T) dans la direction longitudinale de véhicule, une force de poussée (F) agissant vers le bas dans la direction verticale de véhicule peut être générée,
**caractérisé en ce que**
le séparateur (16), la partie (T1) élastique et l'élément de guidage d'air (22) peuvent être montés sur la voiture de tourisme de manière à pouvoir être coulissés en direction horizontale en tant qu'unité dans la direction longitudinale de voiture et peuvent être déplacés ensemble entre une position repoussée dans l'avant de voiture et une position déployée vers l'avant.

2. Dispositif de guidage d'air (14) selon la revendication 1,
**caractérisé en ce que**
le profil de surface portante (T) est formé en partie par la partie (T1) et éventuellement en partie par le séparateur (16).

3. Dispositif de guidage d'air (14) selon la revendication 1 ou 2,
**caractérisé en ce que**
l'élément de guidage d'air (22) et/ou le séparateur (16) sont formés à partir d'un matériau déformable non élastique.

4. Dispositif de guidage d'air (14) selon l'une des revendications précédentes,
**caractérisé en ce que**
la partie (T1) est réalisée de manière élastique de sorte qu'avec une vitesse croissante de l'écoulement (26) autour du dispositif de guidage d'air (14), un abaissement supplémentaire d'au moins une zone partielle de l'élément de guidage d'air (22) peut être provoqué dans la direction verticale de véhicule vers le bas à partir de la position abaissée (S2).

5. Dispositif de guidage d'air (14) selon l'une des revendications précédentes,
**caractérisé en ce que**
la partie (T1) est pliée au moins dans certaines sections lorsque l'élément de guidage d'air (22) est en position relevée (S1).

6. Dispositif de guidage d'air (14) selon l'une des revendications précédentes,
**caractérisé en ce que**
l'élément de guidage d'air (22) peut être fixé dans sa position relevée (S1) dans sa position relative par rapport au séparateur (16).

7. Dispositif de guidage d'air (14) selon l'une des revendications précédentes,
**caractérisé en ce que**
l'élément de guidage d'air (22) est monté pivotant sur sa zone de bord transversal arrière, dans lequel la position de l'axe de pivotement dans la direction verticale de véhicule est constante dans chaque position du dispositif de guidage d'air (14).

8. Dispositif de guidage d'air (14) selon l'une des revendications précédentes,
**caractérisé en ce que**
l'élément de guidage d'air (22) est de forme tabulaire.

9. Voiture de tourisme, comportant un dispositif de guidage d'air (14) selon l'une des revendications précédentes.
